# EUROPEAN PATENT SPECIFICATION

(11) **EP 4 472 831 B1**
(45) Date of publication and mention of the grant of the patent: **05.08.2026**
(21) Application number: 23704616.4
(22) Date of filing: 06.01.2023
(51) Int. Cl.: B29C 70/38, B29B 11/16

(54) **AUTOMATED METHODS FOR MANUFACTURING SHEETS OF COMPOSITE MATERIAL AND COMPOSITE STRUCTURES, PATTERN PREPARATION AND FORMING SYSTEMS, AND SHEETS OF COMPOSITE MATERIAL**
AUTOMATISIERTE VERFAHREN ZUR HERSTELLUNG VON VERBUNDSTOFFMATERIALBAHNEN UND VERBUNDSTOFFSTRUKTUREN, MUSTERHERSTELLUNGS- UND -FORMSYSTEME UND VERBUNDSTOFFMATERIALBAHNEN
PROCÉDÉS AUTOMATISÉS POUR LA FABRICATION DE FEUILLES DE MATÉRIAU COMPOSITE ET DE STRUCTURES COMPOSITES, SYSTÈMES DE PRÉPARATION ET DE FORMATION DE MOTIF, ET FEUILLES DE MATÉRIAU COMPOSITE

(30) Priority: 04.02.2022 US 202217592738
(43) Date of publication of application: 11.12.2024
(73) Proprietor: Northrop Grumman Systems Corporation, Falls Church, VA 22042-4511 (US)
(72) Inventor: MADSEN, Christopher, J., Layton, UT 84040 (US); BENSON, Vernon, M., Morgan, UT 84050 (US)
(74) Representative: Bardehle Pagenberg Partnerschaft mbB Patentanwälte Rechtsanwälte
(86) International application number: PCT/US2023/060254
(87) International publication number: WO 2023/150402

(56) References cited:
- WO-A1-2019/122431
- US-A1- 2014 265 058
- NORTH THIN PLY TECHNOLOGY: "Welcome to the 2nd issue of our TPT", 1 January 2013 (2013-01-01), Penthalaz, Switzerland, pages 1 - 10, XP002809050, Retrieved from the Internet <URL:https://www.thinplytechnology.com/assets/mesimages/ntpt-2013-01.pdf> [retrieved on 20230414]

## Description

### BACKGROUND

Composite materials, such as pre-impregnated (pre-preg) materials, are used in the formation of high-strength low- weight structures, such as, but not limited to, parts used to build aircraft and spacecraft. Pre-preg material is a composite made of fibers such as carbon, glass, aramid and the like, that are pre-impregnated with a resin system that is used to bond layers or sheets of the material together under heat and pressure. The pre-preg material is typically formed in sheets that are supplied to the manufacturer of the part in a continuous roll format of a fixed width. The manufacturer then cuts the sheets of pre-preg material and stacks of sheets of pre-preg material in particular orientations to create the desired shape and mechanical properties of the part. Heat and pressure are generally used to consolidate and bond the layers or sheets into a solid laminate. Existing processes tend to involve significant waste of composite material, which can amount to significant additional costs in manufacturing composite structures.

For the reasons stated above and for other reasons stated below that will become apparent to those skilled in the art upon reading and understanding the present specification, there is a need in the art for improvements of devices and methods for manufacturing composite structures.

WO 2019/122431 A1, North Thin Ply Technology, Newsletter No 2 - January 2013, page 3 and

US 2014/265058 A1 all disclose methods for manufacturing a composite structure comprising applying fibers having various predetermined lengths to a removable backing material to form a net shape or near net shape pattern for forming a composite structure having a varying transverse cross-section.

### DISCLOSURE

The present invention is defined by the features of the independent claim(s). Preferred advantageous embodiments thereof are defined by the sub-features of the dependent claims.

Any reference to "embodiment(s)", "example(s)" or "aspect(s) of the invention" in this description not falling under the scope of the claims should be interpreted as illustrative example(s) for understanding the invention.

The above-mentioned problems of current systems are addressed by embodiments of the present disclosure and will be understood by reading and studying the following specification. The following summary is made by way of example and not by way of limitation. It is merely provided to aid the reader in understanding some of the aspects of the disclosure.

In some embodiments, automated methods for manufacturing composite structures may comprise applying fibers having various predetermined lengths to a removable backing material to form a net shape or near net shape pattern for forming a composite structure having a varying transverse cross-section.

In further embodiments, sheets of composite material may comprise strips of composite material adhered to a backing material in a net shape or near net shape pattern for forming a composite structure with a varying transverse cross-section.

In yet further embodiments, automated methods of manufacturing sheets of composite material may comprise applying fibers having various predetermined lengths to a removable backing material to form a net shape or near net shape pattern for forming a composite structure having a varying transverse cross-section.

In some embodiments, a pattern preparation system may comprise a material placement device programmed and configured to apply fibers having various predetermined lengths to a removable backing material to form a net shape or near net shape pattern for forming a composite structure having a varying transverse cross-section.

According to the invention, a forming system comprises an indicia locating device programmed and configured to determine the location of an indicia and determine the location of a pattern of composite material on a removable backing material to align the pattern with the one or more forming surfaces of a tool. The invention is defined in the independent claims 1, 12, 13 and 14 respectively.

### BRIEF DESCRIPTION OF THE DRAWINGS

The present disclosure can be more easily understood and further advantages and uses thereof more readily apparent, when considered in view of the detailed description and the following figures in which:
FIG. 1 is a side view of a pattern preparation system according to an embodiment of the present disclosure;
FIG. 2 is a top view of a sheet of composite material in near net shape pattern comprised of rectangular-shaped strips of composite material for forming a composite spar according to an embodiment of the present disclosure;
FIG. 3 is a top view of a sheet of composite material in near net shape pattern comprised of parallelogram-shaped strips of composite material for forming a composite spar according to an embodiment of the present disclosure;
FIG. 4 is a top view of a sheet of composite material in near net shape pattern for forming a composite stiffener according to an embodiment of the present disclosure; and
FIG. 5 is a side view of a forming system according to an embodiment of the present disclosure.

In accordance with common practice, the various described features are not drawn to scale but are drawn to emphasize specific features relevant to the present disclosure. Reference characters denote like elements throughout the figures and the text.

### MODE(S) FOR CARRYING OUT THE INVENTION

In the following detailed description, reference is made to the accompanying drawings, which form a part hereof, and in which is shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following detailed description is, therefore, not to be taken in a limiting sense, and the scope of the present disclosure is defined only by the claims.

The illustrations presented herein are not meant to be actual views of any particular systems, devices, or composite material patterns for fabricating composite structures, but are merely idealized representations employed to describe illustrative embodiments. The drawings are not necessarily to scale.

As used herein, the terms "substantially," "about," and "approximately" in reference to a given parameter means and includes to a degree that one skilled in the art would understand that the given parameter, property, or condition is met with a small degree of variance, such as within acceptable manufacturing tolerances. For example, a parameter that is substantially met may be at least about 90% met, at least about 95% met, at least about 99% met, or even at least about 100% met.

As used herein, relational terms, such as "first," "second," "top," "bottom," etc., are generally used for clarity and convenience in understanding the disclosure and accompanying drawings and do not connote or depend on any specific preference, orientation, or order, except where the context clearly indicates otherwise.

As used herein, the term "and/or" means and includes any and all combinations of one or more of the associated listed items.

Many composite components may have an inconsistent width along their length. For example, composite stiffeners for aircraft applications may have material removed in regions that are expected to take less loading, in order to reduce the weight of the aircraft. For another example, composite spars for aircraft wings may be tapered along their length to coincide with the tapered shape of the wings. Accordingly, to accommodate the variation in width, such composite components are conventionally manufactured from a sheet of material having a width equal to the widest part of the component. The material may then be trimmed to the final shape, with a substantial volume of extra material removed and discarded. This trimming of extra material may result in significant material waste, which may be costly.

Embodiments of the present disclosure involve methods and devices for the production of continuous or semi-continuous sheets of composite material, such as pre-preg material, with varying widths, varying profiles, and, if desired, varying orientation and varying thickness along the length of the sheet, which may be used directly to form composite structures, or stored in rolls for later use in forming composite structures.

Such sheets of composite material may be formed in a net shape or near net shape pattern for forming a composite structure having a varying transverse cross-section (e.g., a varying width).

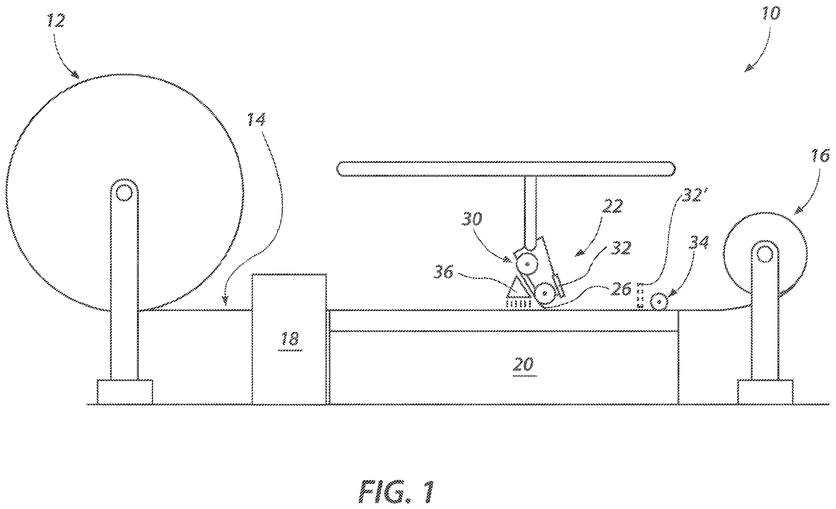

Referring to FIG. 1, a pattern preparation system 10 of one embodiment is illustrated. A supply roll 12 of backing material 14 may be located at a first end, and a take-up roll 16 may be located at an opposing second end. A conveying table 20 may be located between the supply roll 12 and the take-up roll 16, and a material placement device 22 may be located above the conveying table 20. The backing material 14 may extend from the supply roll 12, and over the conveying table 20, to the take-up roll 16. Optionally, a surface treatment device 18, such as a corona discharge device, may be configured to treat the backing material 14 to control adhesion properties, such as by generating an electrical discharge, and the conveying table 20 may comprise a vacuum table and/or a vacuum belt which may stabilize the backing material 14 by selectively applying a vacuum to the backing material 14 while composite material is applied to the backing material 14 with the material placement device 22.

In some embodiments, the backing material 14 may be a pliable backing material such as polyethylene (PE). However, the present disclosure is not limited to PE backing material. An example range for a thickness of the backing material 14 may be between about 0.001 inch (25.4 micrometers (µm)) and about 0.006 inch (152.4 µm). For example, the backing material 14 may be provided as a linear low-density PE film having a thickness of about 0.002 inch (50.8 µm).

Another example of a type of pliable material that could be used as the backing material 14 is polyurethane material. Polyurethane materials may be more pliable (e.g., elastic) than PE material and offer greater tear resistance and may offer advantages in forming complex shapes. Other types of plastics (e.g., polymers) can be used for the backing material 14 including, but not limited to, polyester, nylon and fluorinated hydrocarbons.

The backing material 14 may be provided from the supply roll 12 and may be passed through the surface treatment device 18 to treat a surface of the backing material 14. The treated backing material 14 may then proceed to the conveying table 20 for the application of composite material 26 thereon. The section of backing material 14 located on the conveying table 20 may be held in place with an applied vacuum for the placement of composite material 26 thereon by the material placement device 22.

In some embodiments, the material placement device 22 may comprise an automated fiber placement (AFP) device having an end effector or head, which may apply narrow strips of unidirectional tape. In additional embodiments, the material placement device 22 may comprise an automated tape laying (ATL) device, which may apply wider strips of unidirectional tape. The composite material 26 applied by the material placement device 22 may comprise strips of fibers, such as unidirectional fibers, which may be fully impregnated with resin, partially impregnated with resin, and/or only binder infused.

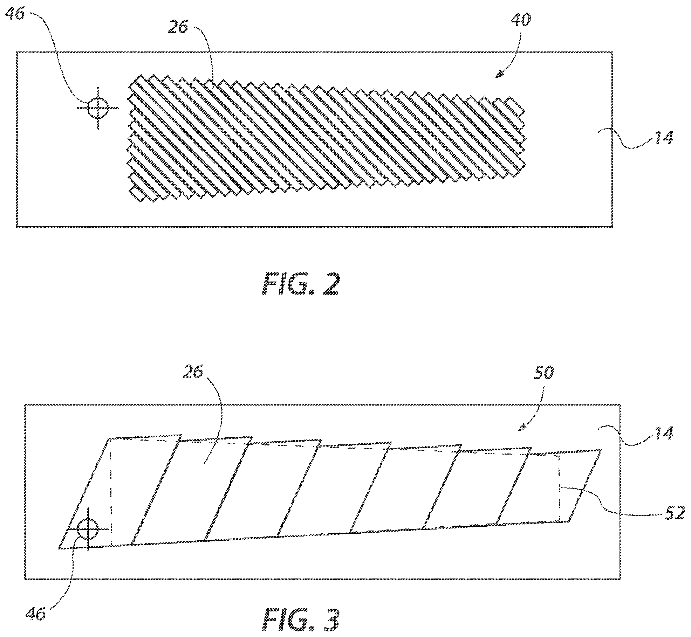

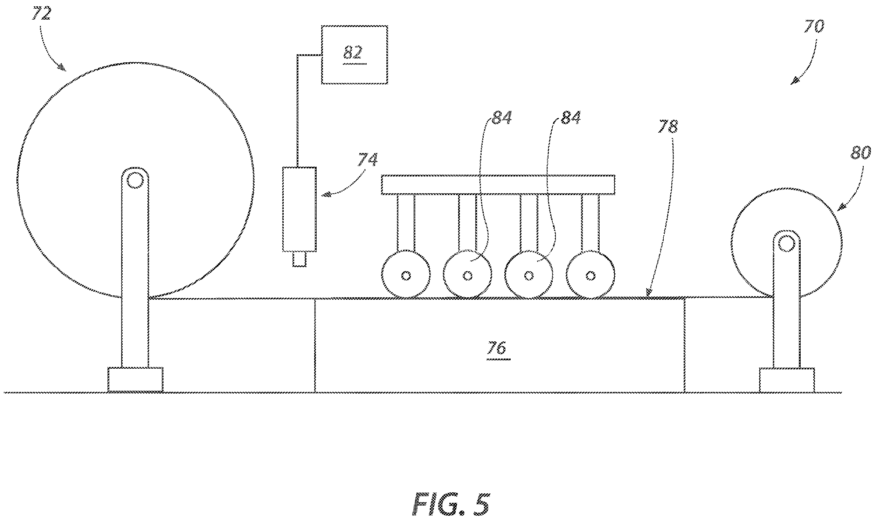

The material placement device 22 may apply segments of composite material 26 onto the backing material 14, the segments of composite material 26 having various predetermined lengths. The segments of composite material 26 may be positioned on the backing material 14 to form a sheet of composite material in a net-shape or near-net-shape pattern 40, 50, 60, 62 (see FIGS. 2-4) for forming a composite structure with a varying transverse cross-section (e.g., a width that varies along a length). The sheet of composite material in a net-shape or near-net-shape pattern 40, 50, 60, 62 may comprise a single-layer of segments of composite material 26 which may abut one another or overlap at the edges or may comprise multiple layers of segments of composite material 26 at the same or different fiber orientations. Multiple sheets of the composite material in a net-shape or near-net-shape pattern 40, 50, 60, 62 may be stacked or laminated in a forming process to form a composite structure, as will be further discussed with reference to FIG. 5.

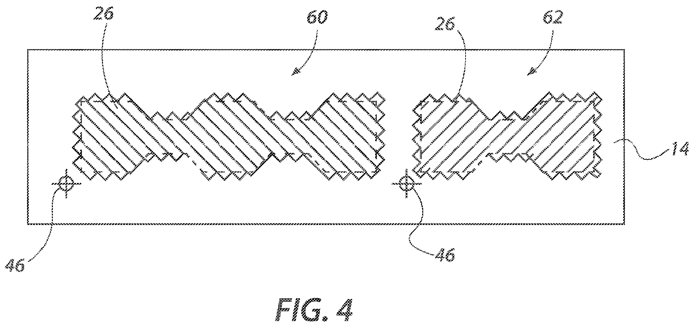

The material placement device 22 may dispense composite material 26 from a composite material source 30, such as a spool of composite material, and cut the composite material 26 from the composite material source 30 to form segments of composite material 26. The material placement device 22 may cut and dispense the composite material 26 to follow a straight border (i.e., linear, see FIGS. 2-3), and/or may cut and dispense the composite material 26 along a non-straight (i.e., non-linear) path that complies with an edge region of the composite structure (see FIG. 4) for which the pattern 40, 50, 60, 62 is configured to be utilized to form.

Additionally, the pattern preparation system 10 may include a slitter 34 separate from the material placement device 22, which may be configured to perform straight slits and/or controlled edge trimming. A heater 36 may also be included with the pattern preparation system 10, which may heat strips of composite material 26 as they are placed by the material placement device 22 to promote adhesion.

In some embodiments, the material placement device 22 may include a marking device 32, which may apply one or more indicia 46 (see FIGS. 2-4) identifying the location of the pattern 40, 50, 60, 62 on the backing material 14. The marking device 32 may be incorporated into the material placement device 22. Optionally, the marking device 32 may be separate from the material placement device 22, such as indicated in dashed lines and shown as marking device 32'. The marking device 32 may apply indicia 46 on one or both of the backing material 14 (see FIGS. 2 and 4) and the composite material 26 (see FIG. 3). In some embodiments, the marking device 32 may comprise a printing head that applies ink to one or more of the backing material 14 and the composite material 26. The ink may be formulated and the indicia configured in a pattern suitable to be detectable by a detection system, as will be discussed further herein with reference to FIG. 5. For example, the ink may be of a contrasting color and may be detectable by an optical system.

In some embodiments, the material placement device 22 may be utilized to place strips of composite material 26 on the backing material 14 to form a pattern for the manufacturing of a composite aerospace structure, such as one more of a spar, a stiffener, and a frame. As shown in FIGS. 2 and 3, a pattern 40, 50 for a tapered spar may comprise a sheet of composite material comprising strips of composite material 26 adhered to the backing material 14 that has a tapered transverse cross-section (e.g., having a width that narrows along the length of the pattern from a first end to a second end). Accordingly the pattern 40, 50 may be transferred to a tool that may form the pattern 40, 50 into the shape of a tapered spar that is in its final shape, or very near to its final shape, such that no trimming, or very minimal trimming, of excess material may be required. As shown in FIG. 2, the strips of composite material 26 may be cut at a right angle (e.g., a 90° angle) relative to the lengths of the strips of composite material 26 such that each of the strips of composite material 26 has a rectangular shape to form the pattern 40.

As shown by the dashed line in FIG. 3, the strips of composite material 26 may be cut at an obtuse or acute angle relative to the lengths of the strips of composite material 26 such that each of the strips of composite material 26 has a non-rectangular shape to form the pattern 50. For example, each of the strips of composite material 26 may be shaped generally as a non-rectangular parallelogram (e.g., a parallelogram having two corners with an obtuse angle and two corners with an acute angle) and/or a non-rectangular trapezoid (e.g., a trapezoid having at least one corner that is an obtuse angle and at least one corner that is an acute angle). This may be especially beneficial when relatively wide strips of composite material 26 are used. The use of relatively wide strips of composite material 26 may result in more material waste when compared to the use of relatively narrow strips of composite material 26 (the dashed line 52 indicates the portion of the pattern 50 utilized for forming a composite spar, with portions outside of the dashed line 52 that will later be trimmed away and discarded). Relatively wide strips of composite material 26, however, may still be desirable to use at times because wider composite material strips may be less expensive per square unit compared to narrower composite material strips.

As shown in FIG. 4, patterns 60, 62 for manufacture of a stiffener may comprise a sheet of composite material comprising strips of composite material 26 adhered to a backing material 14 that has a varying transverse cross-section (e.g., having a width that repeatedly narrows and widens along the length of the pattern from a first end to a second end). Accordingly the patterns 60, 62 may be transferred to a tool that may form the pattern 60, 62 into the shape of a stiffener that is in its final shape, or very near to its final shape, such that no trimming, or very minimal trimming, of excess material may be required. As shown, the backing material 14 may have a uniform width along its length, while the patterns 60, 62 applied to the backing material 14 have a varying width along their lengths.

After the patterns 40, 50, 60, 62 have been applied to the backing material 14, patterns 40, 50, 60, 62 and the backing material 14 may be rolled onto the take-up roll 16 for temporary storage. The take-up roll 16 may then be utilized as a material supply roll to feed the patterns 40, 50, 60, 62 onto a tool to form composite structures from the patterns 40, 50, 60, 62.

In some embodiments, a pattern 40, 50, 60, 62 (e.g., a sheet of composite material comprising strips of composite material adhered to a backing material in a net shape or near net shape pattern for forming a composite structure with a varying transverse cross-section) may be shaped less than 35% larger than the net shape of the composite structure to be formed (e.g., less than 35% of the composite material may be trimmed and removed as waste). In some embodiments, a pattern 40, 50, 60, 62 may be shaped less than 25% larger than the net shape of the composite structure to be formed (e.g., less than 25% of the composite material may be trimmed and removed as waste). In further embodiments, a pattern 40, 50, 60, 62 may be shaped less than 10% larger than the net shape of the composite structure to be formed (e.g., less than 10% of the composite material may be trimmed and removed as waste). In some embodiments, a pattern 40, 50, 60, 62 may be shaped less than 5% larger than the net shape of the composite structure to be formed (e.g., less than 5% of the composite material may be trimmed and removed as waste). In yet further embodiments, a pattern 40, 50, 60, 62 may be shaped at the net shape of the composite structure to be formed (e.g., none of the composite material is trimmed and removed as waste).

In some embodiments, a pattern 40, 50, 60, 62 may be shaped so that the outer margin is less than 30 mm larger than the net shape of the composite structure to be formed (e.g., a strip of material having a width less than 30 mm may be trimmed and removed as waste).

Accordingly, a method of manufacturing a sheet of composite material may comprise applying fibers having various predetermined lengths to a removable backing material, such as a polymer backing material, in a net-shape or near-net-shape pattern for forming a composite structure with a varying transverse cross-section.

As shown in FIG. 5, a material forming system 70 may comprise a material supply 72, an indicia locating device 74, a tool 76 comprising forming surfaces 78, and, optionally, a backing take-up roll 80. The material supply 72 may supply patterns 40, 50, 60, 62 from the pattern preparation system 10. For example, the take-up roll 16 from the pattern preparation system 10 may be utilized for the material supply 72.

The indicia locating device 74 may be utilized to determine at least one of the longitudinal and/or transverse location of the indicia 46 for accurate placement of the pattern 40, 50, 60, 62 on the forming surfaces 78 of the tool 76. The indicia locating device 74 may comprise one or more of a camera, a laser, a light, a photovoltaic cell, and an optical sensor that may be utilized in conjunction with a control system 82 (e.g., a computer) to determine the location of the indicia 46, and thus the location of the pattern 40, 50, 60, 62.

Upon determining the location of the pattern 40, 50, 60, 62 on the backing material 14, the backing material 14 may be fed forward and/or backward, if needed, to a new longitudinal position relative to the tool 76 to align the pattern 40, 50, 60, 62 longitudinally with the tool 76. The pattern 40, 50, 60, 62 may additionally be aligned tangentially relative to the tool 76, such as by moving the backing material 14 and/or the tool 76 transversely relative to one another based on the detected location of the indicia 46 by the indicia locating device 74.

The pattern 40, 50, 60, 62 may then be positioned over the forming surfaces 78 (e.g., mandrel surfaces) of the tool 76 and forming devices 84, such as rollers, squeegees, wipers, fingers, and/or brushes, may press on the backing material 14 to press and form the pattern 40, 50, 60, 62 onto the forming surfaces 78. After the pattern 40, 50, 60, 62 is pressed and formed onto the forming surfaces 78, the backing material 14 may be removed from the pattern 40, 50, 60, 62 and transported to and stored on a backing take-up roll 80. Once all of the desired layers of patterns 40, 50, 60, 62 have been pressed onto forming surfaces 78 of the tool 76, the composite material may be removed for further processing (such as may be the case for a thermoplastic composite or a dry fiber preform) or further processed on the tool 76 (such as may be the case for thermoset composite or dry fiber preform). Once the composite material has been processed appropriately as described above, it may be removed from the tool 76 and trimmed, if needed, to form a composite part with a varying transverse cross-section.

The embodiments of the disclosure described above and illustrated in the accompanying drawing figures do not limit the scope of the invention, since these embodiments are merely examples of embodiments of the invention, which is defined by the appended claims

## Claims

1. An automated method for manufacturing a composite structure, the method comprising:
applying fibers having various predetermined lengths to a removable backing material (14) to form a net shape or near net shape pattern (40, 50, 60, 62) for forming a composite structure having a varying transverse cross-section; and
providing an indicia (46) identifying a known location of the pattern.

2. The method of claim 1, further comprising locating the indicia on the removable backing material.

3. The method of claim 1, further comprising locating the indicia on the pattern.

4. The method of claim 1, wherein applying fibers having various predetermined lengths comprises applying strips of various lengths of composite material containing fibers and resin or matrix.

5. The method of claim 1, further comprising providing the removable backing material from a supply spool.

6. The method of claim 1, further comprising storing the removable backing material with the net shape or near net shape pattern on a take-up spool.

7. The method of any one of claims 1 through 6, further comprising applying the pattern to a tool with the removable backing material.

8. The method of claim 7, wherein applying the pattern to the tool with the removable backing material comprises applying a single-layer pattern, consisting of a single layer of fibers, to the tool.

9. The method of claim 7, wherein applying the pattern to the tool with the removable backing material comprises applying a multiple-layer pattern, consisting of multiple layers of fibers, to the tool.

10. The method of any one of claims 1 through 6, further comprising treating one surface of the removable backing material to control adhesion characteristics between the backing and fibers prior to applying the fibers, wherein treating the one surface of the removable backing material comprises treating the one surface with an electrostatic discharge.

11. The method of claim 1, further comprising manufacturing a sheet of composite material by applying the fibers having various predetermined lengths to the removable backing material in the net shape or near net shape pattern for forming the composite structure having the varying transverse cross-section.

12. A sheet of composite material comprising strips of composite material adhered to a backing material (14) in a net shape or near net shape pattern (40, 50, 60, 62) for forming a composite structure with a varying transverse cross-section; and
a locating indicia (46) identifying a known location on the sheet of composite material.

13. A pattern preparation system comprising a material placement device programmed and configured to:
identify a locating indicia (46) on a removable backing material (14); and
apply fibers having various predetermined lengths to the removable backing material to form a net shape or near net shape pattern (40, 50, 60, 62) including the locating indicia for forming a composite structure having a varying transverse cross-section.

14. A forming system comprising an indicia locating device programmed and configured to determine the location of an indicia (46) and determine the location of a pattern of composite material on a removable backing material (14) to align the pattern (40, 50, 60, 62) with one or more forming surfaces of a tool.

## Patentansprüche

1. Automatisiertes Verfahren zur Herstellung einer Verbundstruktur, wobei das Verfahren umfasst:
Aufbringen von Fasern mit verschiedenen vorbestimmten Längen auf ein ablösbares Trägermaterial (14), um ein Netzform- oder nahezu netzförmiges Muster (40, 50, 60, 62) zur Bildung einer Verbundstruktur mit einem variierenden Querschnitt zu bilden; und
Bereitstellen einer Markierung (46), die eine bekannte Position des Musters identifiziert.

2. Verfahren nach Anspruch 1, das ferner ein Anbringen der Markierung auf dem abnehmbaren Trägermaterial umfasst.

3. Verfahren nach Anspruch 1, das ferner ein Anbringen der Markierung auf dem Muster umfasst.

4. Verfahren nach Anspruch 1, wobei das Aufbringen von Fasern mit verschiedenen vorbestimmten Längen ein Aufbringen von Streifen unterschiedlicher Länge aus einem Verbundmaterial umfasst, das Fasern und Harz oder eine Matrix beinhaltet.

5. Verfahren nach Anspruch 1, das ferner ein Bereitstellen des abziehbaren Trägermaterials von einer Vorratsspule umfasst.

6. Verfahren nach Anspruch 1, das ferner ein Aufwickeln des abziehbaren Trägermaterials mit dem Endform- oder annähernd endförmigen Muster auf eine Aufwickelspule umfasst.

7. Verfahren nach einem der Ansprüche 1 bis 6, das ferner ein Aufbringen des Musters auf ein Werkzeug mit dem abziehbaren Trägermaterial umfasst.

8. Verfahren nach Anspruch 7, wobei das Aufbringen des Musters auf das Werkzeug mit dem entfernbaren Trägermaterial ein Aufbringen eines einlagigen Musters, bestehend aus einer einzigen Faserschicht, auf das Werkzeug umfasst.

9. Verfahren nach Anspruch 7, wobei das Aufbringen des Musters auf das Werkzeug mit dem ablösbaren Trägermaterial ein Aufbringen eines mehrschichtigen Musters, bestehend aus mehreren Schichten von Fasern, auf das Werkzeug umfasst.

10. Verfahren nach einem der Ansprüche 1 bis 6, das ferner ein Behandeln einer Oberfläche des ablösbaren Trägermaterials umfasst, um die Haftungseigenschaften zwischen dem Träger und den Fasern vor dem Aufbringen der Fasern zu steuern, wobei das Behandeln der einen Oberfläche des ablösbaren Trägermaterials ein Behandeln der einen Oberfläche mit einer elektrostatischen Entladung umfasst.

11. Verfahren nach Anspruch 1, das ferner eine Herstellung einer Verbundmaterialbahn umfasst, indem die Fasern mit verschiedenen vorbestimmten Längen auf das ablösbare Trägermaterial in der Endform oder in einer nahezu endförmigen Anordnung aufgebracht werden, um die Verbundstruktur mit dem variierenden Querschnitt zu bilden.

12. Verbundmaterialbahn, die Streifen aus Verbundmaterial umfasst, die in einem Netzform- oder nahezu netzförmigen Muster (40, 50, 60, 62) an einem Trägermaterial (14) haften, um eine Verbundstruktur mit einem variierenden Querschnitt zu bilden; und
eine Positioniermarkierung (46), die eine bekannte Position auf der Verbundmaterialbahn kennzeichnet.

13. Mustervorbereitungssystem, das eine Materialplatzierungsvorrichtung umfasst, die programmiert und konfiguriert ist zum:
Identifizieren einer Positionsmarkierung (46) auf einem abnehmbaren Trägermaterial (14); und
Aufbringen von Fasern mit verschiedenen vorgegebenen Längen auf das abziehbare Trägermaterial, um ein Netz- oder nahezu netzförmiges Muster (40, 50, 60, 62) zu bilden, das die Positionierungsmarkierungen beinhaltet, um eine Verbundstruktur mit einem variierenden Querschnitt zu bilden.

14. Formungssystem, das eine Markierungsortungsvorrichtung umfasst, die programmiert und konfiguriert ist zum Bestimmen der Position einer Markierung (46) und der Position eines Musters aus Verbundmaterial auf einem abnehmbaren Trägermaterial (14), um das Muster (40, 50, 60, 62) mit einer oder mehreren Formflächen eines Werkzeugs auszurichten.

## Revendications

1. Un procédé automatisé pour la fabrication d'une structure composite, le procédé comprenant :
l'application sur un matériau support amovible (14) de fibres ayant des longueurs variées prédéterminées pour former un motif (40, 50, 60, 62) de forme nette ou de forme quasiment nette pour la formation d'une structure composite avec une section droite transversale variable ; et
la mise en place d'un index (46) identifiant une position connue du motif.

2. Le procédé de la revendication 1, comprenant en outre le positionnement de l'index sur le matériau support amovible.

3. Le procédé de la revendication 1, comprenant en outre le positionnement de l'index sur le motif.

4. Le procédé de la revendication 1, dans lequel l'application de fibres ayant des longueurs variables prédéterminées comprend l'application de bandes de longueurs variables d'un matériau composite contenant des fibres et une résine ou une matrice.

5. Le procédé de la revendication 1, comprenant en outre la mise en place du matériau support amovible à partir d'une bobine d'alimentation.

6. Le procédé de la revendication 1, comprenant en outre le stockage sur une bobine réceptrice du matériau support amovible avec le motif de forme nette ou quasiment nette.

7. Le procédé de l'une des revendications 1 à 6, comprenant en outre l'application du motif sur un outil avec le matériau support amovible.

8. Le procédé de la revendication 7, dans lequel l'application du motif sur l'outil avec le matériau support amovible comprend l'application d'un motif en couche unique, constituée d'une unique couche de fibres, sur l'outil.

9. Le procédé de la revendication 7, dans lequel l'application du motif sur l'outil avec le matériau support amovible comprend l'application d'un motif à couches multiples, constitués de couches multiples de fibres, sur l'outil.

10. Le procédé de l'une des revendications 1 à 6, comprenant en outre le traitement d'une seule surface du matériau support amovible pour contrôler des caractéristiques d'adhésion entre le support et les fibres avant d'appliquer les fibres, le traitement de la seule surface du matériau support amovible comprenant le traitement de ladite une seule surface avec une décharge électrostatique.

11. Le procédé de la revendication 1, comprenant en outre la fabrication d'une feuille de matériau composite par application des fibres ayant des longueurs variées prédéterminées sur le matériau support amovible dans le motif à forme nette ou de forme quasiment nette pour la formation de la structure composite avec la section droite transversale variable.

12. Une feuille de matériau composite comprenant des bandes de matériau composite collées à un matériau support (14) dans un motif (40, 50, 60, 62) de forme nette ou de forme quasiment nette pour la formation d'une structure composite avec une section droite transversale variable ; et
un index de positionnement (46) identifiant une position connue sur la feuille de matériau composite.

13. Un système de préparation de motif comprenant un dispositif de placement de matériau programmé et configuré pour :
identifier un index de positionnement (46) sur un matériau support amovible (14) ; et
appliquer des fibres ayant des longueurs variables prédéterminées sur le matériau support amovible pour former un motif (40, 50, 60, 62) de forme nette ou de forme quasiment nette incluant l'index de positionnement pour la formation d'une structure composite ayant une section droite transversale variable.

14. Un système de formation comprenant un dispositif de positionnement d'index programmé et configuré pour déterminer le positionnement d'un index (46) et déterminer la position d'un motif de matériau composite sur un matériau support amovible (14) pour aligner le motif (40, 50, 60, 62) avec une ou plusieurs surfaces de formation d'un outil.
